# EUROPÄISCHE PATENTANMELDUNG

(11) **EP 4 123 410 A1**
(43) Veröffentlichungstag der Anmeldung: **25.01.2023**
(21) Anmeldenummer: 22182739.7
(22) Anmeldetag: 04.07.2022
(51) Int. Cl.: G05D 11/13

(54) **VERFAHREN UND ODORIERUNGSANLAGE ZUM ODORIEREN VON EINEM INNERHALB EINER GASLEITUNG STRÖMENDEN GASGEMISCH**

(30) Priorität: 20.07.2021 DE 102021118737
(71) Anmelder: Westnetz GmbH, 44139 Dortmund (DE)
(72) Erfinder: Gruhn, Mike, 45701 Herten (DE); Niebialek, Sascha, 45894 Gelsenkirchen (DE)
(74) Vertreter: Bals & Vogel Patentanwälte PartGmbB

(57) **Zusammenfassung**

Die Erfindung betrifft ein Verfahren (100) zum Odorieren von einem innerhalb einer Gasleitung (60) strömenden Gasgemisch, wobei das Verfahren (100) die folgenden Schritte aufweist:
- Messen einer Ist-Konzentration eines Odoriermittels in dem Gasgemisch,
- Bestimmen einer Dosiermenge eines Odoriermittels zur Zugabe zum Gasgemisch anhand eines Vergleichs der gemessenen Ist-Konzentration mit einer vorgegebenen Soll-Konzentration des Odoriermittels, und
- Hinzugeben der bestimmten Dosiermenge des Odoriermittels zum Gasgemisch.

## Beschreibung

Die Erfindung betrifft ein Verfahren und eine Odorierungsanlage zum Odorieren von einem innerhalb einer Gasleitung strömenden Gasgemisch.

Im Rahmen der Energiewende wird der Einsatz von Wasserstoff anstatt von Erdgas für die Gewinnung von thermischer Energie, z. B. für die Beheizung von Haushalten, immer intensiver diskutiert.

Eine Umstellung von Erdgas auf Wasserstoff kann schon alleine aufgrund der derzeit noch geringen Verfügbarkeit von Wasserstoff nur schrittweise durchgeführt werden. Auf dem Weg zu einer flächendeckenden Wasserstoffversorgung wird es daher zu einer schrittweisen Umstellung von Teilmengen des derzeit in Gasleitungen strömenden Erdgases zu Wasserstoff kommen, sodass ein Gasgemisch aus Erdgas und Wasserstoff durch die Gasleitungen strömen wird.

Da der Energiegehalt des Wasserstoffs ungefähr nur ein Drittel des Energiegehalts des Erdgases beträgt wird es im Zuge der schrittweisen Umstellung zudem zu einer Erhöhung des Volumenstroms des Gasgemisches kommen. Damit steigt auch der Bedarf an Odoriermittel, das dem Gasgemisch zugesetzt werden muss, um das Risiko einer Gefährdung durch das weitgehend geruchlose Gasgemisch zu verringern.

Dabei muss bei den in Gasleitungen verschiedener Verteilernetze strömenden unterschiedlichen Gasgemischen sichergestellt werden, dass das Odoriermittel den unterschiedlichen Gasgemischen an den unterschiedlichen Gasverteilnetzen bzw. -gebieten in hinreichender Menge und gleichmäßig zugesetzt wird. Aus wirtschaftlichen Gesichtspunkten heraus sollte dem Gasgemisch nur so viel Odoriermittel zugesetzt werden, wie es aus sicherheitstechnischen Aspekten heraus wirklich notwendig ist, um einen übermäßigen Verbrauch der kostenintensiven Ressourcen des Odoriermittels gering zu halten. Hinzu kommt die Schwierigkeit, dass die Anteile von Wasserstoff und Erdgas in den durch die Gasleitungen strömenden Gasgemischen schwanken könnten.

Aufgabe der Erfindung ist es, eine kostengünstige, sichere und zuverlässige Möglichkeit bereitzustellen, wie die oben angegebenen Anforderungen in zukünftigen Gasleitungen erfüllt werden können, insbesondere sichergestellt werden kann, dass die Gasgemische aus Wasserstoff und Erdgas in den Gasleitungen unterschiedlicher Gasverteilnetze bzw. -gebieten den sicherheitstechnischen Anforderungen an die Odorierung unter Beachtung der wirtschaftlichen Gesichtspunkte gerecht werden.

Die voranstehende Aufgabe wird durch das Verfahren gemäß Anspruch 1 und die Odorierungsanlage gemäß Anspruch 12 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Verfahren offenbart sind, selbstverständlich auch im Zusammenhang mit der erfindungsgemäßen Odorierungsanlage und umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die eingangs gestellte Aufgabe durch ein Verfahren zum Odorieren von einem innerhalb einer Gasleitung strömenden Gasgemisch gelöst. Das Verfahren weist die folgenden Schritte auf:
- Messen einer Ist-Konzentration eines Odoriermittels in dem Gasgemisch,
- Bestimmen einer Dosiermenge eines Odoriermittels zur Zugabe zum Gasgemisch anhand eines Vergleichs der gemessenen Ist-Konzentration mit einer vorgegebenen Soll-Konzentration des Odoriermittels, und
- Hinzugeben der bestimmten Dosiermenge des Odoriermittels zum Gasgemisch.

Das erfindungsgemäße Verfahren löst die eingangs gestellte Aufgabe damit durch ein Odorieren das Gasgemisches, welches bereits in der Gasleitung strömt. Dabei kann es sich insbesondere um ein Nachodorieren handeln, da Erdgas im Gasgemisch typischerweise bereits vorodoriert in die Gasleitung gespeist wird. Wenn nun auch Wasserstoff, welches nicht vorodoriert worden ist, in die Gasleitung zusätzlich eingespeist wird, um eine Umstellung auf ein Erdgas-Wasserstoff-Gasgemisch eines Gasverteilnetzes bzw. Gasverteilgebiets zu bewirken, kann das erfindungsgemäße Verfahren gewährleisten, dass die sicherheitstechnisch geforderte bzw. vorgegebene Soll-Konzentration des Odoriermittels in dem Gasgemisch bei den Verbrauchern, insbesondere den Haushalten, ankommt. Wenn das Erdgas und/oder der Wasserstoff nur unzureichend vorodoriert ist, beispielsweise wegen Schwankungen in der Gasqualität, kann dies mittels des erfindungsgemäßen Verfahrens zudem zuverlässig erkannt und durch das Nachodorieren durch Hinzugeben der bestimmten Dosiermenge des Odoriermittels zum Gasgemisch ausgebessert werden, um die notwendige Sicherheit zu gewährleisten.

Neben der zuvor erläuterten Vorgehensweise zum Odorieren bzw. Nachodorieren des in der Gasleitung strömenden Gasgemisches kann das erfindungsgemäße Verfahren vorteilhafterweise auch zum Testen bzw. Parametrisieren der für das Verfahren eingesetzten Odorieranlage bzw. Odoriervorrichtung eingesetzt werden. Diese und weitere bevorzugte Ausführungsdetails der Erfindung werden im Folgenden näher erläutert.

Es kann vorgesehen sein, dass Anteile von Wasserstoff und Erdgas in dem Gasgemisch schwanken. Für diesen Fall können die Schritte des Verfahrens kontinuierlich durchgeführt werden. Mit anderen Worten kann kontinuierlich bzw. laufend, beispielsweise in vorgegebenen Zeitintervallen, ein aktuelles Messen der Ist-Konzentration, ein Bestimmen einer aktuellen Dosiermenge und entsprechend ein Hinzugeben einer aktuell bestimmten Dosiermenge des Odoriermittels zum Gasgemisch erfolgen. Dadurch kann selbst bei schwankenden Gaszusammensetzungen aus Wasserstoff und Erdgas gewährleistet werden, dass stets für die Erfüllung der Sicherheitsanforderungen hinreichend, aber nicht unwirtschaftlich übermäßig, Odoriermittel in dem Gasgemisch vorhanden ist.

Auch kann vorgesehen sein, dass die Ist-Konzentration des Odoriermittels in dem Gasgemisch nach Hinzugabe der bestimmten Dosiermenge des Odoriermittels erneut gemessen wird. Insoweit kann zwischen einer eingangsseitigen Ist-Konzentrations-Messung vor dem Odorieren bzw. Hinzugeben der bestimmten Dosiermenge des Odoriermittels zum Gasgemisch und einer ausgangsseitigen Ist-Konzentrations-Messung nach dem Odorieren unterschieden werden. Die ausgangsseitige Ist-Konzentrations-Messung erlaubt damit ein Überprüfen des korrekten Dosierablaufs bzw. Odorierens.

Dabei kann insbesondere vorgesehen sein, dass die erneut gemessene bzw. ausgangsseitige Ist-Konzentration im Schritt der Bestimmung der Dosiermenge des Odoriermittels herangezogen wird. Die erneut gemessene bzw. ausgangsseitige Ist-Konzentration kann dabei insbesondere als Regelgröße für eine Regelung der Dosiermenge genutzt werden. Entsprechend kann ein Regelkreis vorgesehen sein, bei dem die ausgangsseitige Ist-Konzentration kontinuierlich für den Schritt des Bestimmens der Dosiermenge rückgekoppelt wird, sodass das Bestimmen der Dosiermenge des Odoriermittels zur Zugabe zum Gasgemisch anhand des Vergleichs der beiden bzw. eingangsseitig und ausgangsseitig gemessenen Ist-Konzentrationen mit der vorgegebenen Soll-Konzentration des Odoriermittels erfolgt.

Ferner kann vorgesehen sein, dass das Verfahren den weiteren Schritt eines Zumischens von Wasserstoff zum Gasgemisch aufweist. Das Gasgemisch kann dabei bereits Erdgas und Wasserstoff oder nur Erdgas enthalten. Das Zumischen kann an einem Mischerelement erfolgen. Das Zumischen von Wasserstoff zum Gasgemisch erlaubt es beispielsweise, die Gasgemischzusammensetzung zu verändern, wenn künftig das in der Gasleitung strömende Gasgemisch geändert werden soll. Dadurch kann bereits ein testweises Odorieren mit der neuen Gasgemischzusammensetzung stattfinden. Das testweise Odorieren erlaubt neben dem Testen auch ein Parametrisieren der Odoriervorrichtung, die eingesetzt werden kann. Dies wird, wie zuvor erwähnt, im Folgenden näher ausgeführt.

Hierbei kann im Übrigen vorgesehen sein, dass der Volumenstrom des zugemischten Wasserstoffs variiert wird. Dadurch kann ein Schwanken der Anteile im Gasgemisch getestet werden. Im Übrigen ist es hierdurch möglich, ein Testen und Parametrieren für verschiedene Gasgemischzusammensetzungen des strömenden Gasgemisches durchzuführen.

Außerdem kann vorgesehen sein, dass das Hinzugeben der bestimmten Dosiermenge des Odoriermittels zum Gasgemisch mittels einer Odorierdüse (mitunter auch Impfdüse oder Odordüse genannt) erfolgt und das Verfahren den Schritt eines Wechselns eines Bautyps der Odorierdüse umfasst. Dadurch ist es möglich, verschiedene Bautypen bzw. Bauarten von Odorierdüsen zu testen. Die unterschiedlichen Bautypen der Odorierdüsen können sich hinsichtlich etwa ihrer Materialwahl, ihrer Dimensionierung, beispielsweise eines Düsendurchmessers, und/oder ihrer Geometrie bzw. konstruktiven Ausgestaltung (hier sind auch 1-Stoff-Odorierdüse oder 2-Stoff-Odorierdüse zu erwähnen) unterscheiden. Insbesondere kann das für unterschiedliche Gasgemischzusammensetzungen erfolgen. Auch haben unterschiedliche Gasqualitäten in den Gasleitungen spezifischer Gasverteilnetze bzw. -gebiete einen Einfluss auf die Verdunstungsleistung und den Verschleiß von Odorierdüsen.

Insbesondere kann das Verfahren ferner den Schritt eines Bestimmens eines für das strömende Gasgemisch hinsichtlich einer Verdunstungsleistung und/oder hinsichtlich eines Verschleißes optimalen Bautyps der Odorierdüse umfassen. Insbesondere kann das Verschleißverhalten unterschiedlicher Bautypen von Odorierdüsen für verschiedene Gaszusammensetzungen und Gasqualitäten untersucht bzw. getestet werden und die optimale Odorierdüse für die spezifischen Gegebenheiten an der Gasleitung dieses bestimmten Gasverteilnetzes gefunden werden. Die unterschiedlichen Bautypen von Odorierdüsen können unterschiedliche Verdunstungsleistungen liefern sowie unterschiedliche Verschleißspuren bzw. Verschleißbilder entwickeln.

Auch kann vorgesehen sein, dass das Verfahren ferner die weiteren Schritte eines Vorwärmens des zum Gasgemisch zugegebenen Odoriermittels auf verschiedene Temperaturen und eines Bestimmens einer hinsichtlich einer Verdunstungsleistung optimalen Temperatur des Odoriermittels umfasst. Beispielsweise eine elektrische Vorwärmeeinheit kann zum Vorwärmen des gemäß der bestimmten Dosiermenge dosierten Odoriermittels vor dem Hinzugeben bzw. Einspritzen in das Gasgemisch zum Einsatz kommen. Die Vorwärmeeinheit wird hierzu mit der Odorierdüse verbunden. Das Vorwärmen erlaubt eine Erhöhung der Verdunstungsleistung des Odoriermittels, verstärkt also das Verdunsten bzw. Verdampfen des in flüssigem Aggregatzustand in das Gasgemisch hinzugegebenen bzw. eingespritzten Odoriermittels. Die hier angesprochene Verdunstungsleistung kann dabei die Geschwindigkeit des Verdunstens und/oder den Anteil des Odoriermittels angeben, welches in dem strömenden Gasgemisch verdunstet. Die Parametrisierung der optimalen Temperatur durch das Testen unterschiedlicher Temperaturen des Odoriermittels ermöglicht eine optimale Verdunstung und damit einen möglichst wirtschaftlichen Einsatz von Odoriermittel. Dabei kann die Verdunstungsleistung gemessen oder beobachtet werden und diejenige Temperatur als optimal gewählt werden, die die höchste Verdunstungsleistung liefert.

Auch kann vorgesehen sein, dass der Schritt des Hinzugebens der bestimmten Dosiermenge des Odoriermittels zum Gasgemisch innerhalb einer Bypassleitung der Gasleitung erfolgt. Die Bypassleitung kann dabei mit zwei Anschlussstellen zum Anschluss an die Gasleitung ausgestaltet sein bzw. entsprechend angeschlossen sein. Die Bypassleitung kann derart an die Gasleitung angeschlossen sein, dass das in der Gasleitung strömende Gasgemisch einerseits durch die Gasleitung und vorbei an der Bypassleitung strömen kann und andererseits durch die Bypassleitung und zurück in die Gasleitung strömen kann. Dadurch kann das Odorieren ohne Beeinflussung der Gasversorgung von Haushalten mittels der Gasleitung gewährleistet werden. Die Bypassleitung kann eine Aufnahmeeinrichtung zur Aufnahme der Odorierdüse aufweisen bzw. kann die Odorierdüse darin aufgenommen sein. Auch kann die Bypassleitung eine Messeinrichtung zum Messen des Odoriermittelanteils bzw. einer Ist-Konzentration eines Odoriermittels in dem Gasgemisch aufweisen bzw. kann eine solche Messeinrichtung dort vorgesehen sein.

Weiterhin kann vorgesehen sein, dass das Verfahren in einer mobilen Odorierungsanlage durchgeführt wird. Die mobile Odorierungsanlage kann auf einfache Art und Weise an unterschiedliche Gasleitungen, insbesondere unterschiedlicher Gasverteilnetze bzw. -gebiete, verbracht werden und dort insbesondere eine Bypassleitung zu den Gasleitungen schalten, um zu odorieren. Bei Einsatz der mobilen Odorierungsanlage ist keine aufwändige und kostenintensive Montage von Messeinrichtungen und Odorierdüsen bzw. Odoriervorrichtungen an den Gasleitungen bzw. Anschlüssen der Gasleitungen notwendig, um die Odorierung bei veränderlichen Gasgemischen zu testen. Wenn beispielsweise das Gas in einer Gasleitung eines Gasverteilnetzes verändert werden soll, beispielsweise von 0 % Wasserstoffanteil auf 20 % Wasserstoffanteil im Gasgemisch, so ist es nicht notwendig, dort die vorhandene Odorieranlage ohne getestete Odorieranlagen-Konfigurationen (für Wasserstoff) umzubauen. Um in Erfahrung zu bringen, welche die notwendige Odoriermittelmenge bzw. welches Odoriermittel oder welche Art von Odoriermitteldosiersystem in der Gasleitung für die spezifische Gaszusammensetzung und Gasqualität, die in diesem Gasverteilnetz bereitgestellt, wird, kann die mobile Odorierungstestanlage zu diesem Gasverteilnetz verbracht werden und die Bypassleitung ohne Störung des Gasverteilbetriebs an die Gasleitung angeschlossen werden, um das Testen zu übernehmen. Dazu kann die Odorierdüse in der Aufnahmeeinrichtung aufgenommen werden und Odoriermittel in das in der Bypassleitung strömende Gasgemisch zugefügt werden, um die Odoriermittelkonzentration zu verändern. Eine, wie oben beschriebene, ausgangsseitige Ist-Konzentrations-Messung kann erfolgen, um sicherzustellen, dass bei den vorliegenden Gegebenheiten, wie Gasgemischzusammensetzung und Gasqualität, hinreichend Odoriermittel verdunstet ist bzw. vom Gasgemisch aufgenommen worden ist, um die notwendigen Sicherheitsanforderungen an das Gasgemisch zu erfüllen.

Gemäß einem zweiten Aspekt der Erfindung wird die eingangs gestellte Aufgabe durch eine Odorierungsanlage zum Odorieren von einem innerhalb einer Gasleitung strömenden Gasgemisch gelöst. Die Odorierungsanlage weist zumindest eine Messeinheit, eine Steuereinheit und eine Odoriervorrichtung mit einer Odorierdüse auf. Die Steuereinheit ist zur Durchführung des Verfahrens nach dem ersten Aspekt der Erfindung eingerichtet.

Die Odorierungsanlage kann, bei mobiler Ausgestaltung, einen Anhänger für ein Kraftfahrzeug, einen Transportbehälter oder ein Kraftfahrzeug umfassen. Dadurch kann die Odorierungsanlage auf einfache Art und Weise mobil ausgestaltet werden. In der Variante des Anhängers können Reifen und eine Anhängerkupplung zur Kupplung an einem Kraftfahrzeug an der Odorierungsanlage vorgesehen werden. Die Bypassleitung ist in diesem Falle in dem Anhänger angeordnet. In der Variante des Transportbehälters, der auch als Container oder Transportrahmen bezeichnet werden kann, können beispielsweise Krananschlussmittel wie Ösen oder dergleichen zur Befestigung eines Krans daran an der Odorierungsanlage vorgesehen werden. Der Transportbehälter kann auf diese Art und Weise auf einen Lastkraftwagen oder dergleichen gehievt werden, um dann zum Einsatzort verbracht zu werden. Alternativ ist auch denkbar, dass der Transportbehälter zur Aufnahme durch einen Gabelstapler oder dergleichen ausgebildet ist, um auf einen Lastkraftwagen oder ein anderes Fahrzeug aufgeladen zu werden. Die Bypassleitung kann in dem Transportbehälter angeordnet sein. In der Variante des Kraftfahrzeugs kann es sich um ein Nutzfahrzeug handeln, welches einen Laderaum aufweist, in dem die Bypassleitung angeordnet ist.

Bei einer mobilen Ausführungsart der Odorierungsanlage weist die Odorierungsanlage demnach eine Art Gehäuse oder Container auf, in und/oder an dem sie mit ihren technischen Anlagen, insbesondere der Bypassleitung, verortet ist. Die Odorierungsanlage bzw. das Gehäuse oder der Container können insbesondere verschließbare Zugangsmittel zum Betreten, wie etwa eine Tür oder eine Rollade, aufweisen. Insoweit kann es sich also um eine begehbare Odorierungsanlage handeln. An dem Gehäuse oder Container der Odorierungsanlage können zudem Klappen, Türen, Fenster oder dergleichen vorgesehen sein, die einen unmittelbaren Zugang zu den Anschlussstellen der Bypassleitung und ggf. weiteren Anlageteilen bzw. Komponenten der Odorierungsanlage, wie etwa einer Odoriervorrichtung, ermöglichen. Ein Schaltschrank mit Elektronik der Odorierungsanlage kann sich innerhalb oder außerhalb des Gehäuses bzw. Containers befinden.

Wie bereits oben erläutert worden ist, kann vorgesehen sein, dass eine austauschbare Odorierdüse in der Aufnahmeeinrichtung an der Bypassleitung aufgenommen ist. Die Austauschbarkeit der Odorierdüsen an der Aufnahmeeinrichtung ermöglicht es, dass unterschiedliche Bautypen von Odorierdüsen für die Verteilung des flüssig aus den Odorierdüsen austretenden und im Gasgemisch verdunstenden Odoriermittels getestet werden können. Unterschiedliche Odorierdüsen können in der Odorierungsanlage vorgehalten werden. Das Vorhalten unterschiedlicher Odorierdüsen in der Odorierungsanlage ermöglicht das Testen dieser für die gegebenen Bedingungen des Gasgemisches, also insbesondere die Gaszusammensetzung und die Gasqualität. So können beim testweisen Odorieren mittels der Odorierungsanlage die optimalen Odorierdüsen gefunden werden, die für die vorliegende Gaszusammensetzung und Gasqualität eine hohe Verdunstungsleistung liefern. Diese Odorierdüsen können dann in der Gasleitung eingesetzt werden, um die Verdunstungsleistung hoch zu halten und so möglichst wenig Odoriermittel zu verschwenden bzw. mit möglichst wenig Odoriermittel die notwendige Odorierung und damit einhergehende Sicherheit bereitzustellen.

Außerdem kann vorgesehen sein, dass ein Formteil mit einem Schauglas an die Bypassleitung angeschlossen ist. Das Schauglas ermöglicht den vor Ort befindlichen Technikern eine optische bzw. visuelle Kontrolle des in der Bypassleitung strömenden Gasgemisches.

Dabei kann vorgesehen sein, dass das Schauglas derart relativ zu der Aufnahmeeinrichtung angeordnet ist, dass die Odorierdüse mittels des Schauglases visuell kontrolliert werden kann. Dies ermöglicht den vor Ort befindlichen Technikern eine optische bzw. visuelle Kontrolle der Odorierdüse. So kann einerseits die Verdunstung des Odoriermittels kontrolliert werden und andererseits der Verschleiß der Odorierdüse bei der gegebenen Gasmischung inspiziert werden, ohne die Odorierdüse zu entnehmen bzw. den testweisen Odorierbetrieb zu unterbrechen.

Es kann auch vorgesehen sein, dass die Messeinrichtung zumindest einen Gaschromatographen, insbesondere Prozess-Gaschromatographen, umfasst. Der Gaschromatograph kann nicht nur dazu eingerichtet sein, die Odoriermittelkonzentration in dem Gasgemisch festzustellen, sondern auch die Gaszusammensetzung selbst festzustellen, also die Anteile von Wasserstoff und Erdgas und ggf. weiterer Gase. Auch kann vorgesehen sein, dass die Messeinrichtung den Volumenstrom des Gasgemisches misst.

Dabei kann vorgesehen sein, dass die Messeinrichtung einen Gaschromatographen vor der Aufnahmeeinrichtung bzw. der darin aufgenommenen Odorierdüse und einen Gaschromatographen hinter der Aufnahmeeinrichtung bzw. der darin aufgenommenen Odorierdüse umfasst. Entsprechend kann mittels der Odorierungsanlage die bereits vorliegende Odoriermittelkonzentration in dem Gasgemisch vor einer (testweisen) Odorierung und der durch das Odorieren dem Gasgemisch hinzugefügte Odoriermittelanteil bzw. die Erhöhung der Odoriermittelkonzentration festgestellt werden.

Außerdem kann vorgesehen sein, dass die Bypassleitung ein Mischerelement zum Zumischen eines Gases zum in der Bypassleitung strömenden Gasgemisch aufweist. Vorzugsweise ist das Mischerelement vor der Odorierdüse bzw. ihrer Aufnahmeeinrichtung angeordnet. Bei dem zugemischten Gas kann es sich insbesondere um Wasserstoff handeln, welches dem Gasgemisch, welches aus Erdgas oder einer Mischung aus Erdgas und Wasserstoff bestehen kann, zugemischt wird. Das Mischerelement in der Bypassleitung erlaubt insoweit die Veränderung des Gasgemisches für künftige Umstellungen des Gasgemisches in der Gasleitung. Wenn beispielsweise der Wasserstoffanteil des in der Gasleitung in einem Gasverteilernetz strömenden Gasgemisches künftig gesteigert werden soll, kann dieses Gasgemisch mit dem erhöhten Wasserstoffanteil durch entsprechende Wasserstoffzumischung mittels des Mischerelements zuvor an der Odorierungsanlage getestet werden. Insbesondere kann dann ein testweises Odorieren mittels der Odorierdüse in der Bypassleitung stattfinden, um, wie vorstehend bereits erläutert, die optimale Odoriermittelmenge und/oder die Odorierdüse mit dem geringsten Verschleiß und/oder der höchsten Verdunstungsleistung für den zukünftigen Betrieb der Gasleitung festlegen zu können.

Ferner kann vorgesehen sein, dass die Odorierungsanlage eine Odoriervorrichtung mit einer Odoriermitteldosierpumpe und einem Odoriermittelvorratsbehälter aufweist. Die Odoriermitteldosierpumpe kann entsprechend mit der Odorierdüse verbunden sein, um mittels der Odoriermitteldosierpumpe dosiert Odoriermittel aus dem Odoriermittelvorratsbehälter in die Bypassleitung zu sprühen.

Dabei kann vorgesehen sein, dass die Odoriervorrichtung eine elektrische Vorwärmeinheit für das Odoriermittel aufweist. Dadurch kann die Verdunstungsrate des Odoriermittels in dem durch die Bypassleitung strömenden Gasgemisch erhöht werden. Insbesondere kann vorgesehen sein, dass die elektrische Vorwärmeinheit derart eingerichtet ist, dass unterschiedliche Vorwärmtemperaturen des Odoriermittels, welches aus der Odoriermitteldosierpumpe zudosiert bzw. gepumpt wird, einstellbar sind. So kann das testweise Odorieren um das Ziel des Ermittelns einer optimalen Vorwärmetemperatur des Odoriermittels zur Erhöhung der Verdunstungsrate erweitert werden.

Im Übrigen kann vorgesehen sein, dass die Odorierungsanlage eine Steuereinheit zur Steuerung eines Odorierungsvorgangs oder Odorierungstestvorgangs aufweist. Die Steuereinheit kann zur vollautomatisierten Ausführung eines Odorierungsvorgangs oder Odorierungstestvorgangs ausgeführt sein. So kann beispielsweise vorgesehen sein, dass die Steuereinheit gemäß einem Steuerprogramm arbeitet, welches die in das strömende Gasgemisch zugesetzte Odoriermittelmenge mittels Ansteuerung der Odoriervorrichtung regelt. Dazu kann das Steuerprogramm vorsehen, dass mittels des Gaschromatographen die jeweilige Odoriermittelkonzentration in dem Gasgemisch erfasst wird, insbesondere die Verdunstungsrate des Odoriermittels berechnet wird, und dies durch das Steuergerät als Rückkoppelwert für die Regelung der Dosierung der Odoriermittelmenge genutzt wird.

Vorgesehen sein kann ferner, dass die Odorierungsanlage eine Datenfernübertragungseinheit aufweist. Die Datenfernübertragungseinheit kann dabei zur Überwachung und Ansteuerung der Odorierungsanlage, insbesondere ihres Steuergeräts, eingerichtet sein. Mittels der Datenfernübertragungseinheit kann das testweise Odorieren auch von außerhalb der Odorierungsanlage bzw. insbesondere an einem physisch entfernten Ort, etwa an einer Steuerzentrale, erfolgen. Außerdem können die gewonnenen Daten aus dem Odorieren bzw. den Odoriertestversuchen mittels der Datenfernübertragungseinheit an einen dezentralen Datenspeicher übertragen werden, in dem die Test- bzw. Betriebsdaten dieser und ggf. weiterer mobiler Odorierungsanlagen gespeichert und ggf. ausgewertet werden können. Hierneben ist selbstverständlich auch eine übliche lokale Speicherung der Daten möglich, wozu ein Datenspeicher in der Odorierungsanlage vorgesehen sein kann.

Weiterhin kann vorgesehen sein, dass die Odorierungsanlage einen GPS-Sender umfasst. Der GPS-Sender kann zur Standort- und Diebstahlüberwachung eingerichtet sein. Dies ermöglicht es, die Odorierungsanlage auch über längere Zeiträume am Einsatzort beim Gasverteilernetz zu belassen. Der GPS-Sender kann zudem zur Unterstützung der Einsatzplanung der mobilen Odorierungsanlage genutzt werden.

Es kann auch vorgesehen sein, dass die Odorierungsanlage über eine eigene Stromversorgungsquelle verfügt. Grundsätzlich kann eine primäre Stromversorgung der Odorierungsanlage über einen Stromanschluss an ein örtliches elektrisches Netz erfolgen. Die eigene Stromversorgungsquelle macht die Odorierungsanlage jedoch autark, sie kann so auch bei Unzugänglichkeit zu einem elektrischen Netz oder für die Überbrückung von Stromausfällen erfolgen. Beispielsweise kann es sich bei der Stromversorgungsquelle um eine Photovoltaikanlage handeln, die beispielsweise auf einem Dach der Odorierungsanlage, insbesondere auf einem Anhänger, Container oder Fahrzeug, installiert sein kann.

Möglich ist ferner auch die Bereitstellung von Gasspeichern bzw. Gastanks mit einem darin enthaltenen Gasgemisch, insbesondere Erdgas und/oder Wasserstoff, in der Odorierungsanlage. Dadurch kann nicht nur das Gasgemisch, welches in der Bypassleitung strömt, verändert werden, um, wie oben beschrieben, das Testen eines veränderten Gasgemisches zu ermöglichen. Hierfür kann insbesondere das oben bereits erwähnte Mischerelement genutzt werden, mittels dem das Gas aus dem Gasspeicher bzw. Gastank in die Bypassleitung eingeleitet werden kann. Es ist auch möglich, damit eine Notgasversorgung bereitzustellen, wenn es zu geplanten oder ungeplanten Gasversorgungsunterbrechungen kommt.

Anhand der beigefügten Zeichnung wird die Erfindung gemäß von Ausführungsbeispielen nachfolgend näher erläutert. Sämtliche aus den Ansprüchen, der Beschreibung oder der Figur hervorgehenden Merkmale, einschließlich konstruktiver Einzelheiten, können sowohl für sich als auch in den beliebigen verschiedenen Kombinationen erfindungswesentlich sein. Es zeigen:
- Fig. 1: eine schematische Draufsicht auf einen Teil einer Odorierungsanlage gemäß einem Ausführungsbeispiel der Erfindung, die an einer Gasleitung angeschlossen ist;
- Fig. 2: eine schematische Draufsicht auf die vollständige Odorierungsanlage aus Fig. 1 in einer mobilen Ausgestaltung gemäß einem Ausführungsbeispiel der Erfindung, und
- Fig. 3: eine schematische Darstellung von einer Abfolge von Schritten eines Verfahrens zum Odorieren von einem innerhalb einer Gasleitung der Fig. 1 oder 2 strömenden Gasgemisch gemäß einem Ausführungsbeispiel der Erfindung.

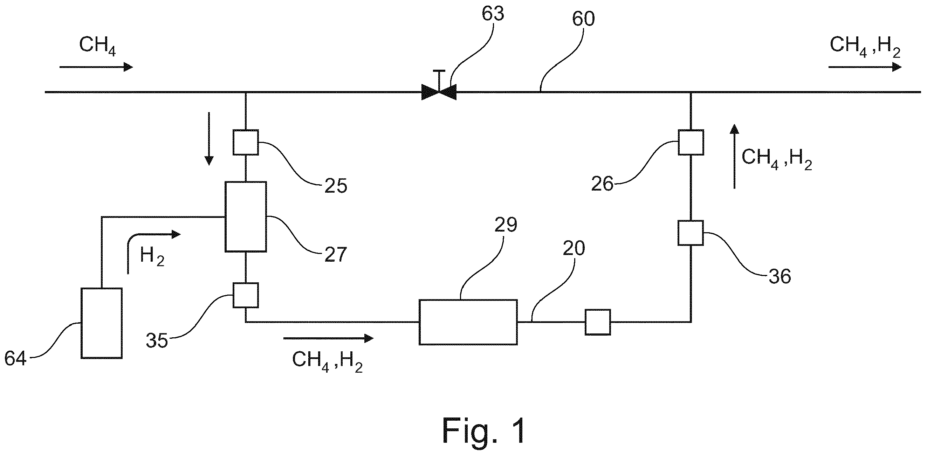

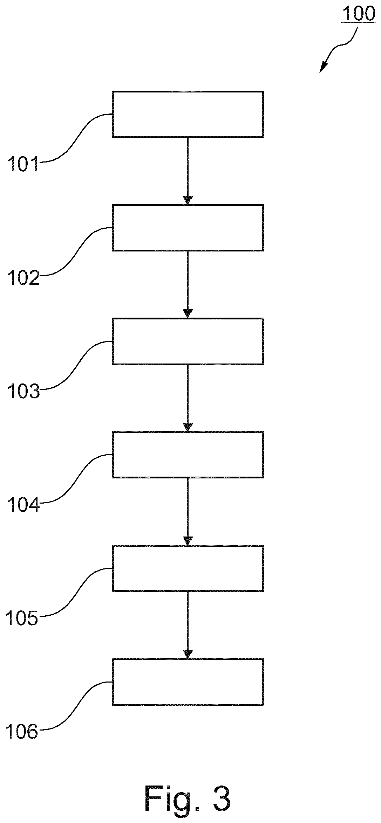

Elemente mit gleicher Funktion und Wirkungsweise sind in den Figuren 1 und 3 jeweils mit denselben Bezugszeichen versehen.

Figur 1 zeigt exemplarisch eine Anordnung einer Gasleitung 60 mit einem darin strömenden Gasgemisch, welches beispielhaft Erdgas CH₄ sein kann. In der Gasleitung 60 befindet sich hier beispielhaft ein Absperrventil 63. An die Gasleitung 60 ist eine Bypassleitung 20 angeschlossen, wobei die Absperreinrichtung (hier als Absperrventil 63, alternativ beispielsweise ein Kugelhahn bzw. eine technische Einrichtung, um den Volumenstrom zu drosseln, das könnte eine Regelgerät oder -ventil sein), betätigt werden kann, damit der gesamte Volumenstrom des Gasgemisches bzw. ein Teil des Volumenstromes, der vorliegend beispielhaft nur aus Erdgas besteht, optional aber auch mit Wasserstoff H₂ versetzt sein kann, in der gezeigten Pfeilrichtung strömend durch die Bypassleitung 20 strömen muss.

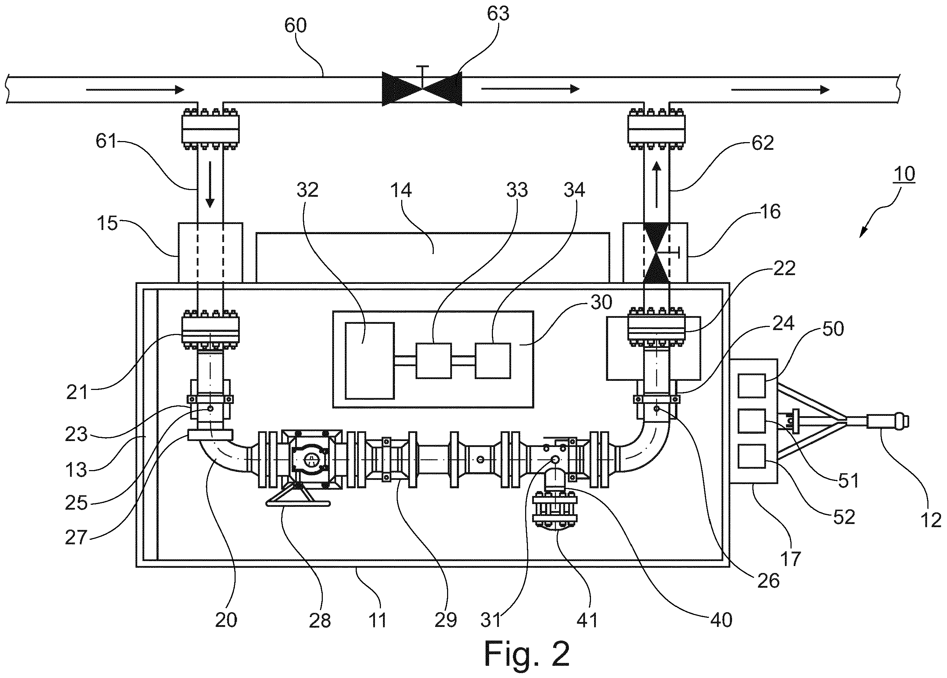

Mittels der Odorierungsanlage 10, die hier mitsamt der Bypassleitung 20 sowie den darin bzw. daran angeordneten Komponenten gezeigt ist und mit mehr Detail in einer lediglich beispielhaft gewählten mobilen Ausführungsvariante in Fig. 2 gezeigt ist, kann ein Odorieren des innerhalb der Gasleitung 60 strömenden Gasgemisches erfolgen. Anstelle der mobilen Ausführungsvariante der Odorierungsanlage 10 aus Fig. 2 kann genauso eine stationäre Odorierungsanlage 10 mit allen oder einigen der in Bezug auf Fig. 1 und Fig. 2 erläuterten Komponenten zum Einsatz kommen. Die Odorierung kann nach dem in Fig. 3 gezeigten Verfahren 100 sowie in dem Maße abgewandelt und/oder erweitert erfolgen, wie im Rahmen dieser Beschreibung erläutert wird.

Vorliegend wird das Verfahren 100 für ein Anwendungsszenario betrachtet, bei dem ein Gasverteilnetz bzw. -gebiet zukünftig auf eine Versorgung eines Gasgemisches aus Erdgas und Wasserstoff umgestellt werden soll. Dieser Vorgang soll vorab mittels des Verfahrens 100 getestet werden. Alternativ kann aber auch bereits die Versorgung mit dem Gasgemisch aus Erdgas und Wasserstoff erfolgen, wobei mittels der Odorierungsanlage 10 eine Hinzugabe von Odoriermittel erfolgen kann, wenn die Konzentration des Odoriermittels in dem Gasgemisch gemäß Messungen nicht ausreicht, wenn die Gasgemischzusammensetzung schwankt oder dergleichen.

In einem ersten Schritt 101 des Verfahrens 100 kann das Absperrventil 63 betätigt werden, um den Gesamt- oder Teilvolumenstromdes Gasgemisches durch die Bypassleitung 20 durchzuführen. Alternativ kann das Absperrventil 63 nicht vollständig betätigt werden, sodass nur ein Teilstrom von der Gasleitung 60 durch die Bypassleitung 20 hindurchströmt.

In einem zweiten Schritt 102 des Verfahrens 100 erfolgt eingangsseitig der Bypassleitung 20 eine Messung an einem Gaschromatographen 25, insbesondere einem Prozess-Gaschromatographen. Es sind auch andere quantitative und qualitative Messverfahren anwendbar. Zum Beispiel seien hier Messverfahren genannt die auf elektrochemischer, photooptischer oder kalorimetrischer Basis arbeiten. Dabei kann der Energiegehalt des Gasgemisches bestimmt werden.

In einem darauf folgenden dritten Schritt 103 erfolgt ein Zumischen von Wasserstoff aus einem Tank 64 bzw. einer Wasserstoffquelle im allgemeinen an einem Mischerelement 27 in der Bypassleitung 20. Dieser Wasserstoff kann nicht odoriert sein oder bereits vorodoriert sein.

In einem hierauf folgenden vierten Schritt 104 wird an einer Messvorrichtung 35, insbesondere an einem weiteren Gaschromatographen, eine Ist-Konzentration des Odoriermittels in dem Gasgemisch gemessen. Es sind auch andere quantitative und qualitative Messverfahren anwendbar. Zum Beispiel seien hier Messverfahren genannt die auf elektrochemischer, photooptischer oder kalorimetrischer Basis arbeiten.

In einem darauf folgenden fünften Schritt 105 wird eine Dosiermenge eines Odoriermittels zur Zugabe zum Gasgemisch anhand eines Vergleichs der gemessenen Ist-Konzentration mit einer vorgegebenen Soll-Konzentration des Odoriermittels bestimmt. Die Differenz aus der Soll-Konzentration und der Ist-Konzentration wird dabei als Dosiermenge bestimmt.

In einem anschließenden sechsten Schritt 106 wird schließlich die bestimmte Dosiermenge des Odoriermittels zum Gasgemisch hinzugegeben. Dies erfolgt vorliegend an einer Odorierdüse 31 hinter einem Gaszähler 29 in der Bypassleitung 20.

Das gesamte Verfahren 100 kann dabei durch eine Steuereinheit 50 (siehe Fig. 2) gesteuert werden. Außerdem kann das Verfahren 100 weitere, nicht gezeigte Schritte umfassen. So kann die Ist-Konzentration erneut bzw. ausgangsseitig der Bypassleitung 20 mittels einer weiteren Messvorrichtung 36 gemessen werden. Diese ausgangsseitige Ist-Konzentration kann als Rückkoppelwert für den Schritt 105 nutzbar gemacht werden. Möglich ist auch eine erneute Messung des Energiegehalts mittels eines ausgangsseitig befindlichen Gaschromatographen 26.

Darüber hinaus kann ein Testen bzw. Parametrieren der Odorierungsanlage 10 erfolgen. So können beispielsweise unterschiedliche Bautypen von Odorierdüsen 31 für unterschiedliche Gasgemischzusammensetzungen aus Erdgas und Wasserstoff und unterschiedliche Gasqualitäten in dem vorliegenden Gasverteilnetz getestet werden. Auch unterschiedliche Temperaturen eines elektrischen Vorwärmers 34 (siehe Fig. 2) können getestet werden, um eine optimale Vorwärmtemperatur des Odoriermittels vor dem Hinzugeben zum Gasgemisch zu ermitteln. Möglich ist zudem, auch in Kombination mit den vorgenannten Möglichkeiten des Testens bzw. Parametrierens, ein Variieren des Volumenstroms des zugemischten Wasserstoffs.

Figur 2 zeigt weitere Details der Odorierungsanlage 10 aus Fig. 1 in einer beispielhaften mobilen Ausführungsvariante und in einer Draufsicht, wobei ein Dach der Odorierungsanlage 10 entfernt worden ist bzw. nicht gezeigt ist, um eine Ansicht auf die Komponenten innerhalb der Odorierungsanlage 10 zu ermöglichen. Teilweise sind Elemente, insbesondere in einer Odoriervorrichtung 30 und in einem Schaltschrank 17, lediglich in rein schematischer Darstellung gezeigt.

Die vorliegend gezeigte Odorierungsanlage 10 ist dadurch mobil ausgestaltet, indem sie mit einem Anhänger 11 mit einer Anhängerkupplung 12 ausgestattet ist, um von einem Fahrzeug (nicht gezeigt) gezogen zu einem Einsatzort an einem Gasverteilernetz bzw. in einem Gasverteilergebiet verbracht zu werden. Alternativ zu dieser Ausführung der mobilen Odorierungsanlage 10 mit einem Anhänger 11 ist aber auch denkbar, dass die Odorierungsanlage 10 auf andere Art und Weise mobil, das heißt nicht fest verbaut, sondern von einem Ort zu einem anderen Ort transportierbar, ausgestaltet ist. Beispiele hierfür sind Container bzw. Transportrahmen oder Nutzfahrzeuge, in denen die Komponenten der mobilen Odorierungsanlage 10, insbesondere die Bypassleitung 20 mit ihren Komponenten, wie nachstehend näher erläutert wird, angeordnet sein kann.

In der Odorierungsanlage 10 befindet sich die Bypassleitung 20. Die Bypassleitung 20 ist an eine Gasleitung 60, die hier nur teilweise gezeigt ist, angeschlossen. Dazu weist die Bypassleitung 20 zwei Anschlussstellen 21, 22 auf, die vorliegend durch Flansche ausgebildet sind. Diese werden mittels geeigneter Leitungen 61, 62, beispielsweise in Form von Rohren, an die Gasleitung 60 angeschlossen, wobei an den Anschlussstellen seitens der Gasleitung 60 hier beispielsweise wieder eine Flanschverbindung gezeigt ist.

An einer Seite bzw. Seitenwand der Odorierungsanlage 10 sind Klappen 15, 16 vorgesehen, die den Anschlussstellen 21, 22 gegenüberliegen. Diese werden hochgeklappt, um die Leitungen 61, 62 an die Anschlussstellen 21, 22 heranzuführen und anzuschließen. Neben diesen Zugängen in die Odorierungsanlage 10 ist außerdem eine große Klappe 14 zwischen den beiden kleinen Klappen 15, 16 für einen einfachen Zugang zu einer Odoriervorrichtung 30 in der Odorierungsanlage 10 vorgesehen. Ferner ist die Odorierungsanlage 10 über eine Rolllade 13 begehbar.

Durch die Gasleitung 60 strömt das Gasgemisch aus Erdgas. Es kann, wie zuvor erläutert, zudem Wasserstoff aufweisen. Da Erdgas und Wasserstoff weitestgehend geruchslos sind, muss dem Gasgemisch ein Odoriermittel zugesetzt werden, damit eine Gefährdung durch unerkanntes Gas vermieden werden kann. Da die Menge an Odoriermittel, die benötigt wird, von verschiedenen Voraussetzungen, wie insbesondere der Gasgemischzusammensetzung und der Gasqualität abhängt, die schwanken können und die möglicherweise nicht beeinflusst werden kann, ist es typischerweise notwendig, eine vergleichsweise hohe Menge von Odoriermittel bereitzustellen.

Mittels der Odorierungsanlage 10 hingegen ist es beispielsweise möglich, ein testweises Odorieren in der Bypassleitung 20 parallel zum Gasbetrieb in der Gasleitung 60 durchzuführen, um die Odoriermittelmenge in dem Gasgemisch festzustellen bzw. zu prüfen. Ferner kann damit die Odoriermittelmenge in dem Gasgemisch durch Zugabe mittels einer Odorierdüse 31, die an einer Aufnahmeeinrichtung der Bypassleitung 20 aufgenommen ist, erhöht werden und wiederum der Einfluss auf die Gaszusammensetzung gemessen werden. Besonders vorteilhaft ist dies, wenn die Gaszusammensetzung verändert wird oder werden soll, um zu bestimmen, welches die optimale Odoriermittelmenge ist, die benötigt wird, um die Sicherheitsanforderungen zu erfüllen.

Für das Zudosieren von Odoriermittel zu dem in die Bypassleitung 20 abgezweigten Gasgemisch weist die Odorierungsanlage 10 die Odoriervorrichtung 30 auf. Die Odoriervorrichtung 30 umfasst einen Odoriermittelvorratsbehälter 32, in dem das Odoriermittel bevorratet ist, eine Odoriermitteldosierpumpe 33 und die elektrische Vorwärmeeinheit 34 zum Vorwärmen des Odoriermittels vor dem Einspritzen in das Gasgemisch mittels der hiermit verbundenen Odorierdüse 31 zur Erhöhung der Verdunstungsleistung des Odoriermittels.

Neben der Variation des Odoriermittels in dem strömenden Gasgemisch ist es, wie zuvor bereits erläutert worden ist, mittels der Odorierungsanlage 10 ebenfalls möglich, verschiedene Bautypen bzw. Bauarten von Odorierdüsen 31 zu testen. Dazu ist die Aufnahmeeinrichtung derart eingerichtet, dass unterschiedliche Odorierdüsen 31 darin lösbar aufgenommen werden können. So kann das Verschleißverhalten der Odorierdüsen 31 für verschiedene Gaszusammensetzungen und Gasqualitäten untersucht bzw. getestet werden und die optimale Odorierdüse für die spezifischen Gegebenheiten an der Gasleitung 60 dieses bestimmten Gasverteilnetzes gefunden werden.

Zudem ist eine optische bzw. visuelle Kontrolle des Verschleißverhaltens der Odorierdüse 31 sowie des Verdunstungsverhaltens des Odoriermittels in dem Gasgemisch in der Bypassleitung 20 durch ein Schauglas 41 in einem Formteil 40 gegeben, welches an der Bypassleitung 20 angeordnet ist. Das Schauglas 41 ermöglicht dazu einen Blick durch das Formteil 40 hindurch auf die Odorierdüse 31 in der Bypassleitung 20.

Eine weitere Stellgröße, die mittels der Odorierungsanlage 10 verändert werden kann, um das Odorieren zu testen bzw. die Odorierung in der Gasleitung 60 basierend auf Testungen mittels der Odorierungsanlage 10 zu verbessern, ist das Zumischen von Gasen, insbesondere Wasserstoff, zu dem abgezweigten Gasgemisch in der Bypassleitung 20. Hierzu weist die Bypassleitung 20 ein Mischerelement 27 auf. Über das Mischerelement 27 kann durch den Tank 64 (siehe Fig. 1) ein weiteres Gas, insbesondere Wasserstoff, zugemischt werden, wie vorstehend bereits erläutert worden ist. Dies kann besonders vorteilhaft sein, wenn die Gaszusammensetzung in der Gasleitung 60 schwankt oder künftig verändert werden soll. Dann kann mittels der Odorierungsanlage 10 bzw. Testungen auf dieser sichergestellt werden, dass eine optimale Odorierung des Gasgemisches erfolgt.

An der Bypassleitung 20 ist eine Messeinrichtung mit den zwei Gaschromatographen 25, 26 sowie einem Gaszähler 29 vorgesehen. Die Gaschromatographen 25, 26 sind jeweils an Muffen 23, 24 der Bypassleitung 20 angeordnet. Der Gaschromatograph 25 ist am Eingang der Bypassleitung 20 bzw. vor der Odorierdüse 31 und vor dem Gaszähler 29 angeordnet. Der Gaschromatograph 26 ist am Ausgang der Bypassleitung 20 bzw. hinter der Odorierdüse 31 und hinter dem Gaszähler 29 angeordnet. Schließlich weist die Bypassleitung 20 eine Absperreinrichtung 28 (vorliegend in Form eines Handventils) zum Schließen der Bypassleitung 20 auf, sowohl im Eingang als auch im Ausgang der Bypassleitung 20, siehe Fig. 2.

Ferner weist die Odorierungsanlage 10 einen Schaltschrank 17 auf, in dem eine Steuereinheit 50 zur Steuerung von Odorierungstestvorgängen angeordnet ist. Der Schaltschrank 17 weist hierneben auch eine Datenfernübertragungseinheit 51 zur Übertragung der gewonnen Daten aus den Testvorgängen sowie einen GPS-Sender 52 zur Lokalisierung der Odorierungsanlage 10 auf. Alternativ können die Steuereinheit 50, die Datenfernübertragungseinheit 51 und der GPS-Sender 52 außerhalb des Schaltschranks 17 verortet werden.

### Bezugszeichenliste

- 10: Odorierungsanlage
- 11: Anhänger
- 12: Anhängerkupplung
- 13: Rolllade
- 14, 15, 16: Klappen
- 17: Schaltschrank
- 20: Bypassleitung
- 21, 22: Anschlussstellen
- 23, 24: Muffen
- 25, 26: Gaschromatographen
- 27: Mischerelement
- 28: Absperreinrichtung
- 29: Gaszähler
- 30: Odoriervorrichtung
- 31: Odorierdüse
- 32: Odoriermittelvorratsbehälter
- 33: Odoriermitteldosierpumpe
- 34: elektrischer Vorwärmer
- 35, 36: Messvorrichtungen
- 40: Formteil
- 41: Schauglas
- 50: Steuereinheit
- 51: Datenfernübertragungseinheit
- 52: GPS-Sender
- 60: Gasleitung
- 61, 62: Leitungen
- 63: Absperrventil
- 64: Tank
- 100: Verfahren
- 101...106: Schritte

## Patentansprüche

1. Verfahren (100) zum Odorieren von einem innerhalb einer Gasleitung (60) strömenden Gasgemisch, wobei das Verfahren (100) die folgenden Schritte aufweist:
- Messen einer Ist-Konzentration eines Odoriermittels in dem Gasgemisch,
- Bestimmen einer Dosiermenge eines Odoriermittels zur Zugabe zum Gasgemisch anhand eines Vergleichs der gemessenen Ist-Konzentration mit einer vorgegebenen Soll-Konzentration des Odoriermittels, und
- Hinzugeben der bestimmten Dosiermenge des Odoriermittels zum Gasgemisch.

2. Verfahren (100) nach Anspruch 1, wobei Anteile von Wasserstoff und Erdgas in dem Gasgemisch schwanken und die Schritte des Verfahrens (100) kontinuierlich durchgeführt werden.

3. Verfahren (100) nach Anspruch 1 oder 2, wobei die Ist-Konzentration des Odoriermittels in dem Gasgemisch nach Hinzugabe der bestimmten Dosiermenge des Odoriermittels erneut gemessen wird.

4. Verfahren (100) nach Anspruch 3, wobei die erneut gemessene Ist-Konzentration im Schritt der Bestimmung der Dosiermenge des Odoriermittels herangezogen wird.

5. Verfahren (100) nach einem der voranstehenden Ansprüche, wobei das Verfahren (100) den weiteren Schritt eines Zumischens von Wasserstoff zum Gasgemisch aufweist.

6. Verfahren (100) nach Anspruch 5, wobei der Volumenstrom des zugemischten Wasserstoffs variiert wird.

7. Verfahren (100) nach einem der voranstehenden Ansprüche, wobei das Hinzugeben der bestimmten Dosiermenge des Odoriermittels zum Gasgemisch mittels einer Odorierdüse (31) erfolgt und das Verfahren (100) den Schritt eines Wechselns eines Bautyps der Odorierdüse (31) umfasst.

8. Verfahren (100) nach Anspruch 7, wobei das Verfahren (100) ferner den Schritt eines Bestimmens eines für das strömende Gasgemisch hinsichtlich einer Verdunstungsleistung und/oder hinsichtlich eines Verschleißes optimalen Bautyps der Odorierdüse (31) umfasst.

9. Verfahren (100) nach einem der voranstehenden Ansprüche, wobei das Verfahren ferner die weiteren Schritte eines Vorwärmens des zum Gasgemisch zugegebenen Odoriermittels auf verschiedene Temperaturen und eines Bestimmens einer hinsichtlich einer Verdunstungsleistung optimalen Temperatur des Odoriermittels umfasst.

10. Verfahren (100) nach einem der voranstehenden Ansprüche, wobei der Schritt des Hinzugebens der bestimmten Dosiermenge des Odoriermittels zum Gasgemisch innerhalb einer Bypassleitung (20) der Gasleitung (60) erfolgt.

11. Verfahren (100) nach einem der voranstehenden Ansprüche, wobei das Verfahren (100) in einer mobilen Odorierungsanlage (10) durchgeführt wird.

12. Odorierungsanlage (10) zum Odorieren von einem innerhalb einer Gasleitung (60) strömenden Gasgemisch, wobei die Odorierungsanlage (10) zumindest eine Messeinheit (35, 36), eine Steuereinheit (50) und eine Odoriervorrichtung (30) mit einer Odorierdüse (31) aufweist, und wobei die Steuereinheit (50) zur Durchführung des Verfahrens (100) nach einem der voranstehenden Ansprüche eingerichtet ist.
